(19)

**Europäisches Patentamt**

**European Patent Office**

**Office européen des brevets**

(11) **EP 4 756 678 A1**

(12) # EUROPEAN PATENT APPLICATION

(43) Date of publication:
**10.06.2026 Bulletin 2026/24**

(21) Application number: **25220698.2**

(22) Date of filing: **04.12.2025**

(51) International Patent Classification (IPC):
**G06N 3/0475** *(2023.01)* **G06N 3/09** *(2023.01)*
**G06N 3/0985** *(2023.01)*

(52) Cooperative Patent Classification (CPC):
**G06N 3/0475; G06N 3/006; G06N 3/044;
G06N 3/045; G06N 3/047; G06N 3/08; G06N 3/088;
G06N 3/09; G06N 3/092; G06N 3/0985; G06N 7/01;
G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024 US 202418971472**

(71) Applicant: **Accenture Global Solutions Limited
Dublin 4 (IE)**

(72) Inventors:
• **JOSHI, Sarang Padmakar**
  **411038 Pune (IN)**
• **GARG, Vibhav**
  **201012 Ghaziabad (IN)**
• **SAHNI, Kapil**
  **411060 Pune (IN)**
• **RAJ, Nitya**
  **411006 Pune (IN)**
• **DIKSHIT, Ravi**
  **560103 Bangalore (IN)**
• **AGARWAL, Shefali**
  **122018 Gurgaon (IN)**

(74) Representative: **Müller-Boré & Partner
Patentanwälte PartG mbB
Friedenheimer Brücke 21
80639 München (DE)**

(54) **METHOD AND SYSTEM FOR OPTIMIZING FINE-TUNING OF LARGE LANGUAGE MODEL (LLM)**

(57) Method, system, and computer-readable storage media for optimizing fine-tuning of a Large Language Model (LLM) are disclosed. An adapter recommendation is generated for fine-tuning of the LLM based on input data and a desired output criterion corresponding to each of output aspects. Based on the adapter recommendation, initial coefficient values for coefficients that correspond with the output aspects and an initial ranking value are assigned. Once the coefficients and ranking value are assigned, an adaptive multi-objective low rank adaptation and uncertainty estimation are iteratively performed for a predefined number of iterations or until the desired criterion corresponding to each of the output aspects is achieved. Upon reaching the predefined number of iterations or achieving the desired criterion corresponding to each of the output aspects, an output value for each of the output aspects is derived. The derived output value is used for fine-tuning of the LLM.

EP 4 756 678 A1

**FIG. 3**

**Description**

**TECHNICAL FIELD**

Various examples described herein relate generally to computer-implemented method, system, and computer program product for optimizing fine-tuning of a Large Language Model (LLM).

**BACKGROUND**

Enterprises continuously seek to improve and gain efficiencies in their operations. To this end, enterprises employ software systems to support execution of tasks or operations. Enterprises integrate the software systems in the domain of an intelligent enterprise, which employs artificial intelligence (AI) that can include, for example, machine learning (ML) models. For example, AI can be used for data analytics and/or automating tasks in support of enterprise operations.

In the field of AI, Generative AI (GAI) has recently seen an explosion in popularity. The increasing power and popularity of GAI has seen enterprises seeking avenues to leverage GAI in improving the enterprise operations. GAI includes Large Language Models (LLMs), which are used for a variety of use cases based on training data.

**SUMMARY**

Implementations of the present disclosure enable derivation of settings and configurations for fine-tuning of a Large Language Model (LLM) in a minimal time period with optimal utilization of computer resources.

In at least one example, the present disclosure provides a computer implemented method for optimizing fine-tuning of an LLM. The method includes generating, based on input data and based on a desired output criterion corresponding to each of a plurality of output aspects, an adapter recommendation for fine-tuning of the LLM. Based on the adapter recommendation and the LLM, the method includes assigning a first set of coefficient values for a plurality of coefficients and a first set of ranking values. Each coefficient value of the first set of coefficient values corresponds with a different output aspect of the plurality of output aspects. Each ranking value of the first set of ranking values corresponds with a respective priority of each output aspect of the plurality of output aspects. The method includes performing fine-tuning of the LLM using the first set of coefficient values for the plurality of coefficients and the first set of ranking values. Based on the performed fine-tuning of the LLM using the first set of coefficient values for the plurality of coefficients and the first set of ranking values, the method includes computing a first average score. The first average score corresponds with a respective weighted priority of each different output aspect of the plurality of output aspects according to the first set of ranking values. Based on the performed fine-tuning of the LLM using the first set of coefficient values for the plurality of coefficients and the first set of ranking values, the method includes assigning a first reward function. The first reward function corresponds with achievement of the desired output criterion corresponding to each of the plurality of output aspects from fine-tuning of the LLM using the first set of coefficient values for the plurality of coefficients and the first set of ranking values. Based on at least one of the first average score and the first reward function, the method includes assigning a second set of coefficient values for the plurality of coefficients and a second set of ranking values. One or more coefficient values of the second set of coefficient values correspond with an updated coefficient value for one or more output aspects of the plurality of output aspects. One or more ranking values of the second set of ranking values correspond with an updated ranking value for a priority of one or more output aspects of the plurality of output aspects. The method includes performing fine-tuning of the LLM using the second set of coefficient values for the plurality of coefficients and the second set of ranking values. Based on the performing fine-tuning of the LLM using the second set of coefficient values for the plurality of coefficients and the second set of ranking values, the method includes computing a second average score. The second average score corresponds with a respective weighted priority of each different output aspect of the plurality of output aspects according to the second set of training values. The method includes verifying whether the second average score satisfies a predetermined threshold value. Based on verifying that the second average score satisfies the predetermined threshold value, the method includes causing display of an output value for each output aspect of the plurality of output aspects.

The present disclosure further describes a system for implementing the method provided herein. The present disclosure also describes a non-transitory computer-readable storage media having instructions stored thereon which, when executed by one or more processors of a computing device, cause the computing device to perform operations in accordance with the method described herein.

It is appreciated that method in accordance with the present disclosure can include any combination of the aspects and features described herein. That is, the method in accordance with the present disclosure is not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

## BRIEF DESCRIPTION OF THE DRAWINGS

Various examples in accordance with the present disclosure will be described with reference to the drawings, in which:

FIG. 1 depicts an example environment that may be used to execute implementations of the present disclosure.

FIG. 2 depicts an example conceptual architecture of a fine-tuning optimizer for optimizing or fine-tuning of a Large Language Model (LLM), in accordance with implementations of the present disclosure.

FIG. 3 depicts an example process flow of optimizing or fine-tuning of the LLM, in accordance with implementations of the present disclosure.

FIG. 4A depicts an example graph illustrating accuracy of the LLM achieved during multiple iterations and ranking values updated during the multiple iterations, in accordance with implementations of the present disclosure.

FIG. 4B depicts an example graph illustrating a number of iterations estimated for fine-tuning of the LLM and computer resources required for the estimated number of iterations, in accordance with implementations of the present disclosure.

FIG. 5 is a flow diagram that presents an example computer implemented method for optimizing fine-tuning of the LLM, in accordance with implementations of the present disclosure.

FIG. 6 depicts an example computer system to implement the system, in accordance with implementations of the present disclosure.

Like reference numbers and designations in the various drawings indicate like elements.

## DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

With the advent of Generative Artificial Intelligence (GAI) systems, enterprises are adopting the GAI systems to support execution of various tasks or processes. For example, a GAI system may support communications and interactions, and processes in software systems to support decision-making within the enterprises. Multiple applications within an enterprise network environment may use and interact with foundation models or Large Language Models (LLMs) of the GAI systems to provide input and/or data for execution of a wide variety of tasks, such as, human computer interactions (e.g., question and answering), automating process execution, process planning, generating step-by-step procedures for the process execution, performing data analysis, and/or the like. Therefore, the LLMs have capability of Natural Language Processing (NLP) related tasks and processing unstructured data. Due to the capability of processing the unstructured data, the LLMs can be implemented for various domains and applications such as, software engineering, computational biology, healthcare or medicine, marketing, and/or the like.

An LLM may be trained based on diverse range of datasets, thereby generating a pre-trained LLM. The pre-trained LLM may be used to perform the wide variety of tasks in the various domains and applications. Further, in order to perform specific customized tasks using the pre-trained LLM or to adapt the pre-trained LLM to a specific use case domain or an application, the pre-trained LLM may be fine-tuned or trained based on specific customized datasets. Fine-tuning of the pre-trained LLM may include selecting hyperparameters (e.g., a learning rate, a batch size, a dropout rate, and/or the like) of the pre-trained LLM and tuning the selected hyperparameters. However, selecting the hyperparameters that are appropriate for fine-tuning of the pre-trained LLM may be a non-trivial task. A known method of fine-tuning or training the pre-trained LLM is described below.

In the known method, the pre-trained LLM is selected by determining whether the pre-trained LLM suits a task and a corresponding dataset (e.g., specific customized task and dataset). Upon selecting the pre-trained LLM, the dataset may be pre-processed. Pre-processing of the dataset may involve cleaning of the dataset, splitting of the dataset into training, validation, and testing datasets, and formatting the dataset. After pre-processing the dataset, the hyperparameters of the pre-trained LLM may be selected. Based on the training datasets and the selected hyperparameters, the LLM may be fine-tuned. Fine-tuning of the pre-trained LLM may involve tuning the selected hyperparameters and/or determining whether to prevent specific layers of the pre-trained LLM from being updated during the fine-tuning or to add task-specific layers to already existing layers of the pre-trained LLM. When the specific layers are prevented from being updated during the fine-tuning, parameters or weights of the specific layers may remain unchanged and remaining layers of the pre-trained LLM may be fine-tuned based on the specific customized task. Upon fine-tuning the pre-trained LLM, performance of the pre-trained LLM may be evaluated based on the testing datasets to determine if the pre-trained LLM (after the fine-tuning or training) is ready for deployment or if further fine-tuning or training is required. If the pre-trained LLM is ready for deployment, the pre-trained LLM may be deployed for the specific task. Further, the performance of the deployed pre-trained LLM may be periodically monitored to fine-tune or train the pre-trained LLM for optimal performance.

In the above-described known method, the training datasets driving fine-tuning of the pre-trained LLM may include vast or variety of datasets and/or unnecessary or redundant data. The unnecessary or redundant data may increase cost of fine-tuning the pre-trained LLM. The vast or variety of datasets may result in a different fine-tuning time. The different fine-tuning time may further cause unpredictability in outcomes of the pre-trained LLM, thereby resulting in low performance of the pre-trained LLM. Therefore, the pre-trained LLM may be subjected for further fine-tuning or training.

In addition, the optimal performance of the pre-trained LLM may depend on selection of the hyperparameters, as the hyperparameters impact the performance of the pre-trained LLM. Therefore, it is important to select the appropriate hyperparameters for fine-tuning. In the known method, different combinations of the hyperparameters may be selected using techniques such as a grid search or a random search, which may be time consuming process and not efficient. Due to which, the performance of the pre-trained LLM may not be optimal and the pre-trained LLM may be subjected for further fine-tuning or training.

Therefore, the known method of fine-tuning the pre-trained LLM may require a high degree of iterations and experimentations (e.g., trial and error mechanisms) to achieve the optimal performance. Further, the iterations may be performed only based on the performance of the pre-trained LLM (e.g., accuracy), which may increase the fine-tuning time. In addition, each iteration may carry its own power requirements. Due to which, the known method of fine-tuning the LLM may consume considerable amount of energy and processing capacity.

For example, a large-scale enterprise, with a global customer base exceeding 500 million customers, uses a LLM (e.g., pre-trained LLM) to identify customers at-risk of leaving their loyalty program, so that such customers may be targeted with special offers, early access to sale periods, discounted enrollment fees for a future membership tier, and/or the like. Further, the enterprise may determine that currently the LLM may identify only 60% of at-risk customers, which may pose a significant risk specifically when a holiday season approaches. Therefore, the enterprise decides to fine-tune the LLM to identify at least 90% of at-risk customers. However, fine-tuning of the LLM using the above-described known method may be time-consuming, as the training dataset for fine-tuning of the LLM may include a vast dataset corresponding to more than 500 million customers.

Implementations of the present disclosure provide an efficient simulator framework for expediting and optimizing fine-tuning or training of the pre-trained LLM by leveraging multiple output aspects along with hyperparameter settings for the LLM.

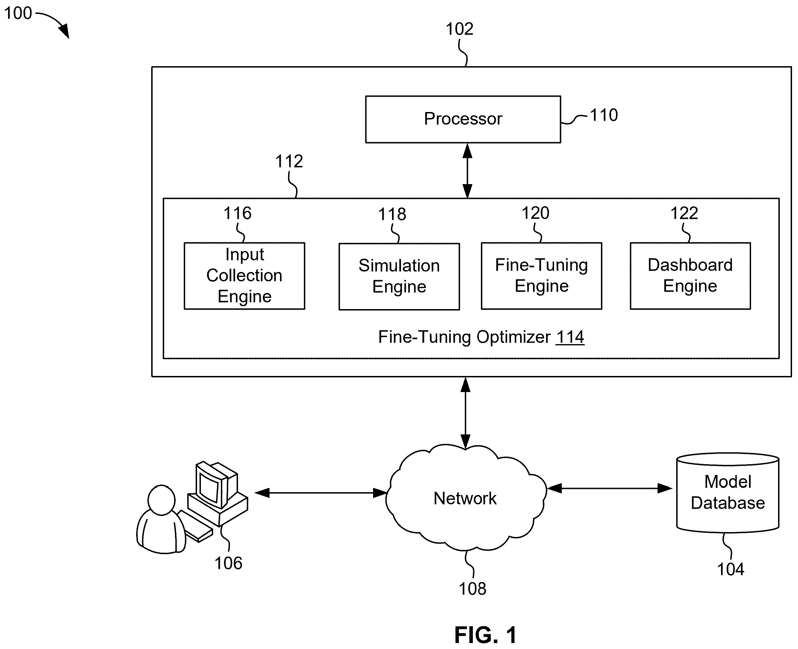

FIG. 1 depicts an example environment 100 that may be used to execute implementations of the present disclosure. The example environment 100, depicted in FIG. 1, includes a system 102, a model database 104, and a user device 106. In the present disclosure, the system 102 may also be referenced to as a computing device, a fine-tuning system, and/or the like. The system 102 may communicate with the model database 104 and the user device 106 using a network 108. In some examples, the network 108 may include a Local Area Network (LAN), a Wide Area Network (WAN), the Internet, or a combination thereof. In some examples, the network 108 may be accessed over a wired and/or a wireless communication link.

The model database 104 includes one or more Large Language Models (LLMs) (also be referenced to as Generative Artificial Intelligence (GAI)) models, foundation models, and/or the like). In an implementation, the LLMs may include pre-trained LLMs. The pre-trained LLMs may be general-purpose GAI models like large deep learning neural networks, which may be trained using a broad range of generalized and unlabeled training data to perform one or more tasks, such as, human computer interactions (e.g., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models.

The user device 106 may be associated with a user, an Information Technology (IT) administrator, and/or an entity (e.g., an enterprise, an organization, a healthcare industry, and/or the like). In some examples, the user device 106 may include a desktop, smartphones, laptops, a tablet, and/or the like. The user device 106 may present one or more user interfaces (e.g., Graphical User Interfaces (GUIs)) of a workspace for the user to interact with the system 102 for fine-tuning (also be referenced to as training, retraining, and/or the like) of the LLMs, so that the LLMs may be adapted to specific customized tasks or use case domains or applications. The user device 106 may be used to provide input and/or receive output to/from the system 102. The input and output may be related to fine-tuning of the LLMs, which are described in detail below.

In some examples, the system 102 may be implemented by way of a single device or a combination of multiple devices that may be operatively connected or networked together. The system 102 may be implemented in hardware or a suitable combination of hardware and software. The "hardware" may include a combination of discrete components, an integrated circuit, an application-specific integrated circuit, a field-programmable gate array, a digital signal processor, or other suitable hardware. The "software" may include one or more objects, agents, threads, lines of code, subroutines, separate software applications, two or more lines of code, or other suitable software structures operating in one or more software applications.

Still referring to FIG. 1, the system 102 includes a processor 110 and a memory 112 communicably coupled to the processor 110. The processor 110 may include one or more processors. Examples of the processor 110 may include, but are not limited to, microprocessors, microcomputers, microcontrollers, digital signal processors, central processing units, state machines, logic circuits, and/or any devices that manipulate data or signals based on operational instructions. Among other capabilities, the processor 110 may fetch instructions (also be referenced to as processor-executable instructions) from the memory 112 and execute the fetched instructions for performing operations according to the present disclosure. The memory 112 may be non-volatile or non-transitory computer-readable medium, such as a magnetic disk or solid-state non-volatile memory or volatile medium such as Random Access Memory (RAM), and/or the like.

Further, the system 102 includes a fine-tuning optimizer 114. The fine-tuning optimizer 114 may be stored in the memory 112 and provided as a downloadable library including the instructions. The fine-tuning optimizer 114 includes an input collection engine 116, a simulation engine 118, a fine-tuning engine 120, and a dashboard engine 122. The processor 110 may execute the components 116-122 of the fine-tuning optimizer 114 to perform intended functions according to the present disclosure (described in detail below).

In an example implementation, the processor 110 may execute the input collection engine 116 to receive an input from the user device 106. The input may include input data, output aspects, and a desired output criterion corresponding to each of the output aspects. In some examples, the input data may include dataset, use case domain, and/or the like. Additionally, or alternatively, the input data may also indicate a LLM (e.g., pre-trained LLM) to be fine-tuned. The input collection engine 116 may download the indicated LLM from the model database 104. In some examples, the output aspects may include a desired processing time, a desired accuracy, a desired computer usage constraint, desired hyperparameters (e.g., a learning rate, a batch size, a dropout rate, and/or the like).

In an example implementation, the processor 110 may execute a simulation engine 118 to generate an output data for fine-tuning of the LLM. The output data may indicate an output value for each of the output aspects.

The simulation engine 118 may generate an adapter recommendation based on the input data and the desired output criterion corresponding to each of the output aspects. The adapter recommendation may indicate an adapter from multiple adapters to be used for fine-tuning of the LLM. In some examples, the adapters may include trainable modules, which are lightweight, modular, and seamlessly integrated at various points within an architecture of the LLM.

Based on the generated adapted recommendation and the indicated LLM, the simulation engine 118 may assign initial coefficient values for coefficients and initial ranking values. The coefficients may correspond with the output aspects. Once the coefficients and ranking values are assigned, the simulation engine 118 may perform adaptive multi-objective low rank adaptation. The adaptive multi-objective low rank adaption may involve performing simulation of fine-tuning the LLM based on the dataset included in the input data, calculating an average score and a reward function for achieving the desired criterion corresponding to each of the output aspects from the simulation of fine-tuning the LLM, and updating coefficient values for the coefficients and ranking values. Based on the updated coefficient values and the updated ranking values, the simulation engine 118 may iteratively perform the adaptive multi-objective low rank adaptation for a predefined number of iterations or until the desired criterion corresponding to each of the output aspects is achieved. Upon reaching the predefined number of iterations or achieving the desired criterion corresponding to each of the output aspects, the simulation engine 118 may derive the output value for each of the output aspects.

Once the output value for each of the output aspects is derived, the simulation engine 118 may perform uncertainty estimation to determine uncertainty in the output value derived for each of the output aspects from the adaptive multi-objective low rank adaptation. If the uncertainty is determined, the simulation engine 118 may iteratively perform the adaptive multi-objective low rank adaptation until deriving the output value for each of the output aspects without any uncertainty.

In an example implementation, the processor 110 may execute the fine-tuning engine 120 to perform fine-tuning of the LLM using the output value derived for each of the output aspects. The fine-tuning engine 120 may select settings and configurations for fine-tuning of the LLM based on the output value derived for each of the output aspects. The settings and configurations may indicate the LLM for fine-tuning, a dataset for fine-tuning of the LLM, computer resources for fine-tuning of the LLM, and/or the like. Based on the selected settings and configurations, the fine-tuning engine 120 may fine-tune the LLM, thereby resulting in a fine-tuned LLM. Such a fine-tuning of the LLM may reduce time required to fine-tune the LLM and optimize utilization of the computer resources required for fine-tuning of the LLM. Thereby, fine-tuning of the LLM may be optimized. The fine-tuned LLM may be stored in the model database 104 and used for the specific customized tasks.

In an example implementation, the processor 110 may execute the dashboard engine 122 to cause display of the output value derived for each of the output aspects and the uncertainty determined in the output value for each of the output aspects on a user interface of the system 102. Additionally, or alternatively, the dashboard engine 122 may cause display of the output value derived for each of the output aspects and the uncertainty estimated in the output value for each of the output aspects on the user interface of the user device 106 as an output for the received input. Therefore, an operator associated with the system 102 or the user associated with the user device 106 may determine whether the fine-tuned LLM is deployable for performing the specific customized tasks or further fine-tuning is required. When it has been determined that the fine-tuned LLM is deployable for performing the specific customized tasks, the entity may use the fine-tuned LLM for performing the specific customized tasks. When it has been determined that the further fine-tuning is required, the simulation engine 118 may be enabled to derive a new output value for each of the output aspects by performing the adaptive multi-objective low rank adaptation.

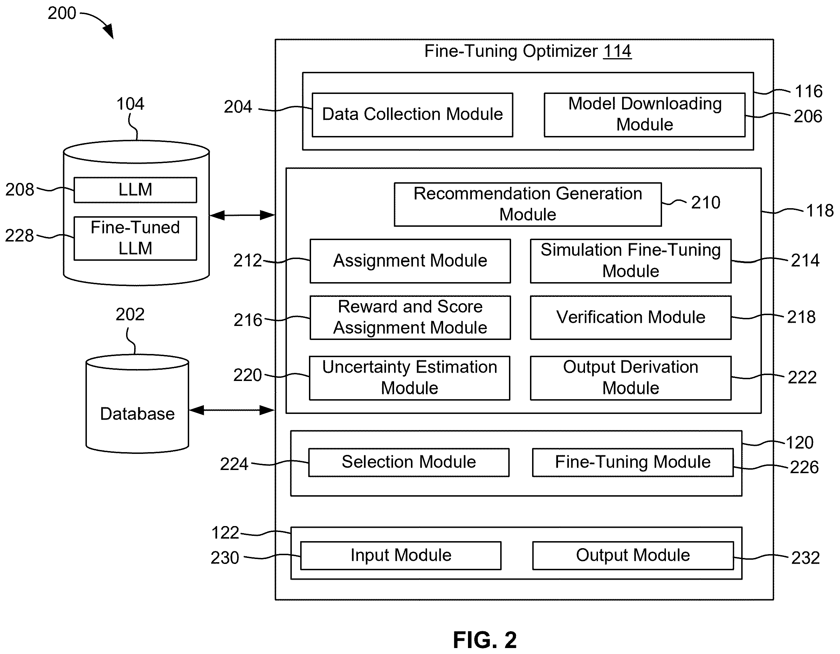

Various examples depicting optimizing the fine-tuning of the LLM is described in detail in conjunction with FIGS. 2-6.

FIG. 2 depicts an example conceptual architecture 200 of the fine-tuning optimizer 114 for optimizing or fine-tuning of the LLM, in accordance with implementations of the present disclosure. The fine-tuning optimizer 114 may be communicably coupled with a database 202, which may store various data and intermediate results generated by the input collection engine 116, the simulation engine 118, the fine-tuning engine 120, and the dashboard engine 122.

The input collection engine 116 includes a data collection module 204 and a model downloading module 206.

The data collection module 204 may receive the input data from the user device 106. The input data may indicate the LLM (e.g., a LLM 208) to be fine-tuned as well as include dataset, use case domain, and/or the like. In some examples, the LLM 208 may be the pre-trained LLM, which is trained based on generalized dataset to perform the variety of tasks. In some examples, the use case domain may identify a domain, which requires implementation of the LLM 208 to perform specific customized tasks related to the domain. Examples of the use case domain may include, but are not limited to, software development, healthcare, retail industries (including enterprise applications), industrial equipment, or any domain that require the LLM 208 to perform data processing on exponentially increasing datasets, while improving efficiency, enhanced decision-making, and actionable operations insights. To illustrate, the use case domain like a healthcare domain may require the LLM 208 to be fine-tuned for identifying patients at high-risk of complications (e.g., heart attacks, stroke) by analyzing medical reports and real-time health data of the patients. The use case domain like a retail industry may require the LLM 208 to be fine-tuned for improving accuracy of demand forecasts, which may optimize inventory levels and avoid stockouts or overstock situations, thereby, directly impacting revenue and customer satisfaction. In some examples, the dataset may include data related to the use case domain. To illustrate, if the use case domain includes the healthcare domain, the dataset for fine-tuning of the LLM 208 may include data of the patients such as, medical reports, health data, and/or the like. It should be noted that the data of the patients may be collected and used only based on an explicit consent received from the patients.

The data collection module 204 may also receive the output aspects and the desired criterion corresponding to each of the output aspects. In some examples, the output aspects may be pre-defined by the system 102. In some other examples, the output aspects may be pre-defined by the user. Examples of the output aspects may include the desired processing time, the desired accuracy (e.g., a desired performance), the desired computer usage constraint, the desired hyperparameters (e.g., a learning rate, a batch size, a dropout rate, and/or the like) of the LLM 208, and/or the like. As would be understood, implementations of the present disclosure may also be realized using other similar output aspects (including the above-described example output aspects). The desired criterion corresponding to the desired processing time may indicate an estimated time (e.g., 4 seconds) for fine-tuning of the LLM 208. The desired criterion corresponding to the desired computer usage constraint may indicate utilization of the computer resources (e.g., CPU, storage (e.g., Random Access Memory), drivers, and/or the like) for fine-tuning of the LLM 208. For example, the desired criterion corresponding to the desired computer usage constraint may indicate 4 Giga Byte (GB) storage for fine-tuning of the LLM 208. The desired criterion corresponding to the desired accuracy may indicate an estimated accuracy (e.g., 0.9) to be achieved from fine-tuning of LLM 208. The desired criterion corresponding to the desired hyperparameters may indicate an estimate value for each of the learning rate, the batch size, the dropout rate, and/or the like. The data collection module 204 may store the input data in the database 202.

The model downloading module 206 may obtain the LLM 208 indicated by the input data from the model database 104. The obtained LLM 208 may be pre-trained LLM.

The simulation engine 118 includes a recommendation generation module 210, an assignment module 212, a simulation fine-tuning module 214, a reward and score assignment module 216, a verification module 218, an uncertainty estimation module 220, and an output derivation module 222. It should be noted that the assignment module 212, the simulation fine-tuning module 214, the reward and score assignment module 216, the verification module 218, and the uncertainty estimation module 220 may be iteratively operated in conjunction with each other for iteratively performing the adaptive multi-objective low rank adaptation for the pre-defined number of iterations or until the desired criterion corresponding to each of the output aspects is achieved, which is descried in detail below.

The recommendation generation module 210 may generate the adapter recommendation for fine-tuning of the LLM 208. The adapter recommendation may recommend an adapter, from the multiple adapters (not shown) for fine-tuning of the LLM 208. The multiple adapters may be stored in the database 202. The adapters may be specialized modules that may be used for efficient fine-tuning of the LLM 208. The adapters may aid in fine-tuning specific modules of the LLM 208 rather than fine-tuning the entire LLM 208. Therefore, the adapters may facilitate customization of the LLM 208 for the specific customized tasks and may achieve comparable performance to entire fine-tuning of the LLM 208 using minimal computing resources.

By way of a non-limiting example, the recommendation generation module 210 may leverage decision trees to recommend the adapter based on the input data, the LLM 208 indicated for fine-tuning, and availability of the computer resources for fine-tuning of the LLM 208. The decision trees may be used for classification or regression tasks and may be used in conjunction with the adapter or to recommend the adapter for fine-tuning of the LLM 208. Therefore, interpretability of the LLM 208 may be improved. For example, the adapter recommended using the decision trees may extract relevant features from the input data and input the extract relevant features to the LLM 208 for fine-tuning. The extracted relevant features may provide insights into a decision-making process of the LLM 208, while aiding decisions of the LLM 208 and providing insights into factors that influence an output of the LLM 208.

Once the adapter recommendation is generated, the assignment module 212 may assign a first set of coefficient values (also be referenced to as initial coefficient values) for the coefficients and a first set of ranking values. In some examples, the assignment module 212 may assign the first set of values for the coefficients and the first set of ranking values, based on the input data and the adapter recommendation.

The first set of coefficient values assigned for the coefficients may correspond with a different output aspect of the output aspects. For example, the coefficients may include accuracy, processing time, computer usage constraint, and hyperparameters. The first set of coefficient values assigned for the coefficients may include: accuracy = 0.7, processing time = 0.15, the computer usage constraint = 0.15, and hyperparameter (learning rate) = 0.05.

Each ranking value of the first set of ranking values may correspond with a respective priority of each output aspect. In some examples, ranking values may refer to a dimension of matrices. The ranking values may be assigned based on the specific customized task, a size of the dataset, and utilization of the computer resources for fine-tuning of the LLM 208. By way of a non-limiting example, the ranking values may include positive integer values. For example, the ranking values may include values that are powers of 2, as the memory 112 in the system 102 may be processed in chunks that align with the powers of 2. With such values, allocation and access of the memory 112 may be optimized while reducing overhead and increasing computational speed. Moderate ranking values may be assigned as the first set of ranking values. In some examples, the moderate ranking values may range from 2 to 64 (e.g., 4, 8, 16, 32, 64). For example, if low ranking values are assigned, a fewer hyperparameters of the LLM 208 may be fine-tuned. Conversely, if high ranking values are assigned, computational load for fine-tuning of the LLM 208 may be increased, which may further lead to overfitting. Further, the ranking values may be modified or adjusted based on evaluation of performance of the LLM 208 that has been fine-tuned based on the input data. Additionally, or alternatively, the ranking values may be modified or adjusted based on factors such as, but are not limited to, a size of the LLM 208, a complexity of the specific customized task, and the utilization of the computer resources.

Based on the first set of coefficient values for the coefficients and the first set of ranking values, the simulation fine-tuning module 214 may perform fine-tuning of the LLM 208. It should be noted that performing fine-tuning of the LLM 208 by the simulation engine 118 may refer to performing simulation of fine-tuning the LLM 208 in a simulation environment and performing fine-tuning of the LLM 208 by the fine-tuning engine 120 may refer to actual fine-tuning of the LLM 208. Performing the fine-tuning of the LLM 208 by the simulation engine 118 may involve retraining the LLM 208 based on the dataset included in the input data, while tuning the desired hyperparameters of the LLM 208.

Based on the performed fine-tuning of the LLM 208 using the first set of coefficient values for the coefficients and the first set of ranking values, the simulation fine-tuning module 214 may compute a first average score and a first reward function. The first average score may correspond with a respective weighted priority of each different output aspect in accordance with the first set of ranking values. The first reward function may include positive or negative rewards based on how much the desired criterion corresponding to each of the output aspects achieved from the fine-tuning of the LLM 208 using the first set of coefficient values and the first set of ranking values.

The assignment module 212 may assign a second set of coefficient values for the coefficient value and a second set of ranking values, based on the first average score and/or the first reward function. Additionally, or alternatively, the second set of coefficient values and the second set of ranking values may be determined in accordance with a value of a learning rate parameter. The second set of coefficient values may correspond with updated coefficient values for one or more of the output aspects. The second set of ranking values may correspond with updated ranking values for the priority of one or more of the output aspects. Using the second set of coefficient values and the second set of ranking values, the simulation fine-tuning module 214 may perform fine-tuning of the LLM 208.

Based on the performed fine-tuning of the LLM 208 using the second set of coefficient values and the second set of ranking values, the reward and score assignment module 216 may compute a second average score. The second average score may correspond with a respective weighted priority of each different output aspect of the output aspects in accordance with the second set of ranking values.

The verification module 218 verifies whether the second average score satisfies a predetermined threshold. The predetermined threshold may refer to a specific value or a criterion used to make decisions during the fine-tuning or training or deployment of the LLM 208. In some examples, the predetermined threshold may be derived based on the desired output criterion corresponding to each of the output aspects. The desired output criterion corresponding to each of the output aspects may be defined in accordance with the domain (e.g., use case or application) where the LLM 208 is being implemented.

If the second average score satisfies the predetermined threshold, the verification module 218 may identify that results of performing fine-tuning of the LLM 208 satisfy the desired criterion corresponding to the output aspects. The results may indicate output values achieved for the respective output aspects by performing the fine-tuning of the LLM 208. If the second average score does not satisfy the predetermined threshold, the verification module 218 may identify that further fine-tuning of the LLM 208 is required as the results of performing fine-tuning of the LLM 208 do not satisfy the desired criterion corresponding to the output aspects.

If the second average score satisfies the predetermined threshold, the uncertainty estimation module 220 determines for an uncertainty in the output values of the output aspects achieved by performing the fine-tuning of the LLM 208 based on the second set of coefficients and the second set of ranking values. In some examples, the uncertainty estimation module 220 may determine for the uncertainty by processing a historical dataset using a Bayesian deep learning technique. If the uncertainty is not determined in the output values of the output aspects, the output derivation module 222 may determine the output values of the output aspects achieved by performing the fine-tuning of the LLM 208 based on the second set of coefficients and the second set of ranking values as output data for fine-tuning (e.g., actual fine-tuning) of the LLM 208 by the fine-tuning engine 120.

If the second average score does not satisfy the predetermined threshold or the uncertainty is determined in the output values of the output aspects achieved by performing the fine-tuning of the LLM 208 based on the second set of coefficients and the second set of ranking values, the assignment module 212 may assign a second reward function based on the performed fine-tuning of the LLM 208 using the second set of coefficient values for the coefficients and the second set of ranking values. Based on at least one of the second average score and the second reward function, the assignment module 212 may further assign a third set of coefficient values for the coefficients and a third set of ranking values. The simulation fine-tuning module 214 may perform fine-tuning of the LLM 208 using the third set of coefficient values for the coefficients and the third set of ranking values. Based on the performed fine-tuning of the LLM 208 using the third set of coefficient values and the third set of ranking values, the reward and score assignment module 216 may compute a third average score and a third reward function.

The verification module 218 may verify whether the third average score satisfies the predetermined threshold. If the third average score satisfies the predetermined threshold, the uncertainty estimation module 220 determines for an uncertainty in the output values of the output aspects achieved by performing the fine-tuning of the LLM 208 based on the third set of coefficients and the third set of ranking values. If the uncertainty is not determined in the output values of the output aspects, the output derivation module 222 may determine the output values of the output aspects achieved by performing the fine-tuning of the LLM 208 based on the third set of coefficients and the third set of ranking values as output data for fine-tuning (e.g., actual fine-tuning) of the LLM 208 by the fine-tuning engine 120.

If the third average score does not satisfy the predetermined threshold or the uncertainty is determined in the output values of the output aspects achieved by performing the fine-tuning of the LLM 208 based on the third set of coefficients and the third set of ranking values, the above-described steps of fine-tuning the LLM 208 may be performed iteratively by assigning subsequent (e.g., fourth, fifth, sixth, and/or the like) set of coefficient values and subsequent set of ranking values. The above-described steps of fine-tuning the LLM 208 may be performed iteratively for the pre-defined number of iterations or until the desired criterion corresponding to each of the output aspects is achieved. The predefined number of iterations may indicate a maximum number of iterations that may be performed. The output values of the output aspects achieved by performing a final fine-tuning of the LLM 208 may be stored in the database 202 and considered as the output data for fine-tuning of the LLM 208. The output values of the output aspects may aid in fine-tuning of the LLM 208 in shortest processing time with optimal utilization of computer resources.

The fine-tuning engine 120 includes a selection module 224 and a fine-tuning module 226. The selection module 224 may receive the output values of the output aspects from the database 202 or the simulation engine 118. Based on the received output values, the selection module 224 may select the LLM 208 and the settings and configurations for fine-tuning of the LLM 208. In some examples, the settings and configurations may include a dataset related to a specific use case domain, and hardware requirements (such as a number of CPUs, RAM, and/or the like).

The fine-tuning module 226 may fine-tune the LLM 208 based on the selected settings and configurations and the output values of the output aspects. The output values of the output aspects may indicate desired values for each of processing time, accuracy, computer usage constraints, and hyperparameters. The fine-tuning module 226 may iteratively perform fine-tuning of the LLM 208 in accordance with the selected settings and configurations and the output values of the output aspects to create a fine-tuned LLM 228. The fine-tuned LLM 228 may be stored in the model database 104. The fine-tuned LLM 228 may be used for performing the specific customized tasks. Therefore, with implementations of the present disclosure, fine-tuning of the LLM 228 may be optimized, while preventing an extensive trial and error involved in fine-tuning of the LLM 208. In some implementations, outputs (e.g., results of the specific customized tasks) generated using the fine-tuned LLM 228 may be monitored and used as feedback for simulation engine 118.

The dashboard engine 122 includes an input module 230 and an output module 232. The input module 230 may receive the input data for performing simulations of fine-tuning the LLM 208 (as described above along with the simulation engine 118).

The output module 232 may display the output values of the output aspects determined as the output data for fine-tuning of the LLM 208 (after performing simulations of fine-tuning the LLM 208) and the uncertainty determined (if any) in the output values, on the user interface of the user device 106. In some examples, the output data may be used automatically for fine-tuning the LLM 208. In some other examples, the output data may be used for fine-tuning of the LLM 208 only upon receiving an approval from the user of the user device 106.

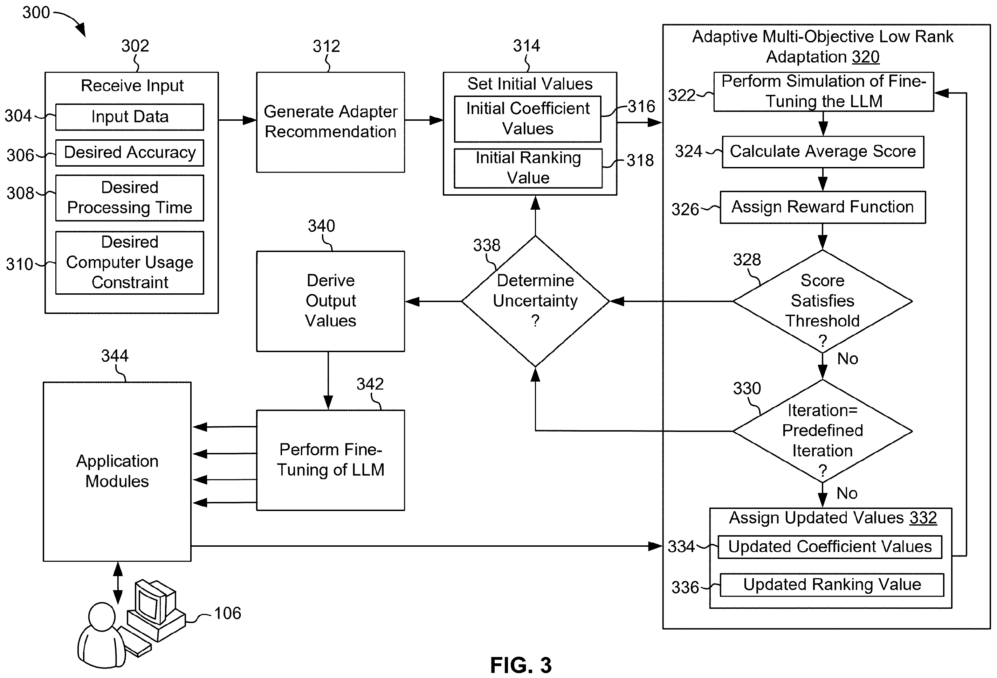

FIG. 3 depicts an example process flow 300 of optimizing or fine-tuning of the LLM 208 (as depicted in FIG. 2), in accordance with implementations of the present disclosure. For simplicity, implementations of the present disclosure are described in FIG. 3, by considering a desired accuracy, a desired processing time, and a desired computer usage constraint as the output aspects, however it should be noted that any other similar aspects can be considered.

The simulation engine 118 may receive an input 302. The input 302 may include an input data 304, a desired accuracy 306, a desired processing time 308, and a desired computer usage constraint 310 and associated respective desired criteria for fine-tuning of the LLM 208. The input data 304 may indicate the LLM 208 to be selected for fine-tuning and may include the dataset and the associated use case domain.

The simulation engine 118 may generate the adapter recommendation 312, which indicates the adapter to be used for fine-tuning of the LLM 208. The adapter recommendation may be generated based on the decision trees, which is described in detail in conjunction with FIG. 2, therefore repeated description is omitted herein for sake of brevity.

The simulation engine 118 may set initial values 314. The initial values 314 may include initial coefficient values 316 for coefficients and an initial ranking value 318. In an example, the coefficients include accuracy (A), processing time (T), and computer usage constraint (C). The accuracy (A) may indicate performance of the LLM 208. The processing time (T) may indicate time required to fine-tune the LLM 208. The computer usage constraint (C) may indicate how much computer resources are required to fine-tune the LLM 208. The simulation engine 118 may include a multi-objective function (F), which may consider and integrate the accuracy (A), the processing time (T), and the computer usage constraint (C) as a single function. The multi-objective function (F) may be defined as:

$$F = \theta\_A * A + \theta\_T * T + \theta\_C * C$$

wherein, '$\theta\_A$', '$\theta\_T$', and '$\theta\_C$' may indicate the coefficient values that reflect the relative importance of each of the output aspects such as the desired accuracy 306, the desired processing time 308, and the desired computer usage constraint 310. In some examples, the simulation engine 118 may assign the initial ranking value 318 as ' $r\_0$'.

Based on the initial coefficient values 316 and the initial ranking value 318, the simulation engine 118 may perform the adaptive multi-objective low rank adaptation 320 to derive the output data for fine-tuning of the LLM 208. The adaptive multi-objective low rank adaptation 320 may be performed for a predefined number of iterations or until the desired accuracy 306, the desired processing time 308, and the desired computer usage constraint 310 have been achieved. The adaptive multi-objective low rank adaptation 320 is described in detail below.

The simulation engine 118 may perform simulation 322 of fine-tuning the LLM 208 using the initial coefficient values set for the coefficients 316 and the initial ranking value 318. Upon performing the simulation 322 of fine-tuning the LLM 208, the simulation engine 118 may calculate an average score 324. The average score 324 may be calculated based on results of the simulation 322. The results may indicate the achieved accuracy, processing time, and the computer usage constraint from the simulation 322. Therefore, the average score may be calculated based on a change in the multi-objective function (F). Due to which, fine-tuning of the LLM 208 may be optimized according to varying requirements and constraints.

Also, based upon performing the simulation 322 of fine-tuning the LLM 208, the simulation engine 118 may assign a reward function 326. The reward function 326 may include a positive reward or a negative reward. The positive reward may be assigned if the desired accuracy 306, the desired processing time 308, and the desired computer usage constraint 310 are achieved from performing the simulation 322 of fine-tuning the LLM 208. The negative reward may be assigned if desired accuracy 306, the desired processing time 308, and the desired computer usage constraint 310 are not achieved from performing the simulation 322 of fine-tuning the LLM 208. In an example, the reward function may be represented as:

$$R(t) = K\_A * f(A(\theta), A_d) - K\_T * T(\theta) - K\_T * T(\theta)$$

wherein, a function '$f(A(\theta), A_d)$' may indicate assignment of a positive reward for achieving desired accuracy '$A_d$' within a threshold.

Once the average score is calculated 324 and the reward function is assigned 326, the simulation engine 118 may perform verification 328 to verify if the average score satisfies a predetermined threshold. When it has been verified that the calculated 324 average score does not satisfy the predetermined threshold, the simulation engine 118 may check whether the simulation 322 has been performed for a predefined number of iterations 330. If the simulation 322 has not been performed for the predefined number of iterations 330, the simulation engine 118 may assign updated values 332. The updated values 332 may include updated coefficient values 334 for the coefficients and updated ranking value 336.

The updated coefficient values 334 may be dynamically assigned for the coefficients based on the assigned reward function and/or a learning rate, which may promote optimization or stability and convergence. In some examples, based on the reward function, the updated coefficient values 334 may be assigned or calculated as:

$$\theta\_i (t + 1) = \theta\_i (t) + \eta * R(t) * \Delta\theta\_i (t)$$

In some examples, the updated ranking value 336 may be assigned using a rank update rule that adapts each iteration of simulation 322 based on changes in the multi-objective function (F). For example, if the accuracy of the LLM 208 decreases after performing the simulation 322 of fine-tuning the LLM 208 based on the initial coefficient values 316 and the initial ranking value 318, the updated ranking value 336 may be greater than the initial ranking value 318. Thereby, the ranking value may be increased to prioritize improvement of the accuracy. Alternatively, if the accuracy of the LLM 208 increases after performing the simulation 322 of fine-tuning the LLM 208 based on the initial coefficient values 316 and the initial ranking value 318, the updated ranking value 336 may be lesser than the initial ranking value 318, which may indicate that the performance of the LLM 208 is improved. Therefore, there may be no immediate requirement to prioritize improvement of the accuracy. In some examples, the updated ranking value 336 may be assigned as:

$$\Delta r = f(\Delta F)$$

wherein, '$\Delta F$' indicates changes in the multi-objective function (F) and '$\Delta r$' indicates the updated ranking value 336.

Based on the updated coefficient values 334 and the updated ranking value 336, the simulation engine 118 may iteratively repeats above-described steps of performing the simulation 322 of fine-tuning the LLM 208, calculating the average score 324 and assigning the reward function 326 based on results of the simulation 322, and assigning the updated values 332, until the average score satisfies the predetermined threshold (e.g., the results of the simulation 322 achieves the desired accuracy 306, the desired processing time 308, and the desired computer usage constraint 310) or for the predefined number of iterations. The results of the simulation 322 may indicate the accuracy of the LLM 208 after performing the simulation 322 of fine-tuning of the LLM 208, as well as the processing time and the computer usage constraints required for performing the simulation 322 of fine-tuning the LLM 208.

When it has been verified that the average score 324 satisfies the predetermined threshold or the simulation 322 has performed for the predefined number of iterations 330, the simulation engine 118 may verify if the uncertainty 338 is determined in the results of the simulation 322. In some examples, the uncertainty 338 may be determined by evaluating a historical dataset using a Bayesian deep learning technique. The historical dataset may include observations derived from previous fine-tuning sessions of the LLM 208. The observations may identify tuned hyperparameters, utilization of the computer resources (e.g., CPU or GPU usage), a batch size, a learning rate, a size of the dataset, a complexity of the LLM 208, accuracy or performance of the LLM 208, the processing time, and/or the like. For example, the observations derived from a previous fine-tuning session of the LLM 208 (e.g., fine-tuned the LLM 208 for an image classification task) may include:

Hyperparameters: Learning rate: 0.001, Batch size: 64, Epochs: 30, Optimizer: Adam
CPU/GPU usage: GPU (80-100% usage on GPU)
Dataset size: 50,000 images
Complexity of LLM:10 layers Convolutional Neural Network (CNN)
Accuracy: ~90% validation accuracy
Processing time: 2 hours on an GPU

If the uncertainty 338 is determined in the results of the simulation 322, the simulation engine 118 may iteratively repeats steps of setting the initial values 314 and performing the adaptive multi-objective low rank adaptation 320 until obtaining the results of simulation 322 without any uncertainty 338.

If the uncertainty 338 is not determined in the results of the simulation 322, the simulation engine 118 may derive output values 340 based on the results of the simulation 322. The output values 340 may indicate performance metrics (accuracy) for evaluating outcomes of the LLM 208 after fine-tuning, estimated number of iterations and processing time for fine-tuning of the LLM 208, estimated computer usage constraint, and updated hyperparameters of the LLM 208 to be tuned during the fine-tuning. The performance metrics (accuracy) may assist in selecting a well-formatted and well-represented dataset for fine-tuning of the LLM 208. The estimated processing time may assist in mitigating timeout issues during fine-tuning of the LLM 208. In some examples, the timeout issues may be occurred due to access token expiry or database connection timeouts. The estimated computer usage constraint may assist in selecting appropriate computer resources (e.g., driver, CPU/GPU, memory, and/or the like) for fine-tuning of the LLM 208. The updated hyperparameters may assist in configuring values of the hyperparameters such as a learning rate, a batch size, and/or the like, for fine-tuning. Therefore, the output values may provide settings for fine-tuning of the LLM 208. Due to which fine-tuning of the LLM 208 may be expedited and optimized.

Based on the output values 340, the fine-tuning engine 120 may perform fine-tuning 342 (actual fine-tuning) of the LLM 208 to create the fine-tuned LLM 228 (as depicted in FIG. 2). Further, the fine-tuned LLM 228 may be used for performing tasks (e.g., specific customized tasks such as evaluating multiple programs employed by the entity like a loyalty program, data reporting, data analytics, and/or the like) associated with various application modules 344. Results of performing the tasks may be provided to the user device 106. Alternatively, or additionally, the results of performing the tasks may be provided as feedback for performing the adaptive multi-objective low rank adaptation 320.

By way of a non-limiting example, consider a scenario where the simulation engine 118 receives the desired criteria corresponding to the output aspects as desired accuracy = 0.9, desired processing time = 4 seconds, desired computer usage constraint = 4GB. In such a scenario, the simulation engine 118 may set an initial ranking value and initial coefficient values for accuracy, processing time, computer usage constraint, and hyperparameters as:

w_accuracy = 0.7 (high importance on accuracy);
w_processing time = 0.15 (medium importance on response time);
w_computerusageconstraint = 0.15 (medium importance on response time); and
hyperparameter = learning rate: 0.05 (smaller value for more gradual weight adjustments)

The simulation engine 118 initiates performing the adaptive multi-objective low rank adaptation 320. In a first iteration, the simulation engine 118 performs a first simulation of fine-tuning the LLM 208 based on the initial rank and the above-described initial coefficient values and monitors results of the first simulation. The results of the first simulation may indicate achieved output aspects as accuracy: 0.88, processing time: 3 seconds, and computer usage constraint: 8 GB. Based on the results of the first simulation, the simulation engine 118 may calculate the average score by combining individual output aspects which are weighted by priorities. In an example herein, the average score may be calculated as 0.873. Further, the simulation engine 118 may assign a negative reward or penalties (e.g., a small penalty) with respect to the accuracy, based on a small difference between the desired accuracy and the achieved accuracy (e.g., 0.9 - 0.8). The simulation engine 118 may assign a negative reward (e.g., high penalty) with respect to the computer usage constraint, based on a large difference between the desired computer usage constraint and the achieved computer usage constraint (e.g., 4GB - 8GB). The simulation engine 118 may not assign any penalties with respect to the processing time, as the achieved processing time is greater than the desired processing time. Based on the negative reward, the simulation engine 118 may update the coefficient values and the ranking value. For example, the coefficient values may be updated as:

w_accuracy = 0.8 (high importance on accuracy as improvement is required);
w_processing time = 0.1 (reduced time as no improvement required);
w_computerusageconstraint = 0.7 (higher importance on computer usage constraint as improvement is required).

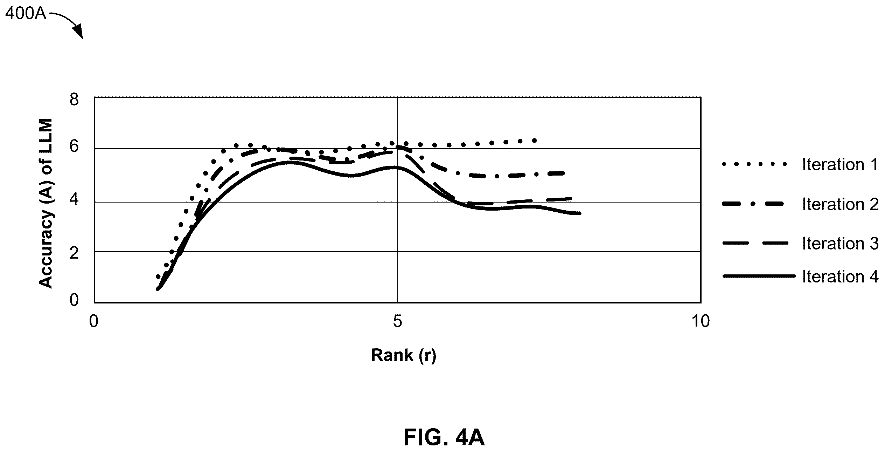

The simulation engine 118 may continue iterations by performing the simulation of fine-tuning the LLM 208 based on the updated coefficient values, calculating the average score, and assigning the reward function based on results of the simulation, and assigning the updated coefficient values and the ranking value. An exemplary graph 400A illustrating accuracy of the LLM 208 achieved during first four iterations and ranking values updated during the first four iterations are depicted in FIG. 4A.

For example, at an end of a fifth iteration, the simulation engine 118 may determine results of performing a fifth simulation of fine-tuning the LLM 208 as accuracy: 0.895, processing time: 3 seconds, and computer usage constraint: 6GB. In such a scenario, the reward function assigned in the fifth iteration may include a positive reward due to achieving the accuracy and the coefficient values are adjusted accordingly. The simulation engine 118 may continue further iterations, as the achieved computer usage constraint is greater than the desired computer usage constraint.

At an end of a tenth iteration, the simulation engine 118 may determine results of performing a tenth simulation of fine-tuning the LLM 208 as accuracy: 0.90, processing time: 3 seconds, and computer usage constraint: 4GB. In such a scenario, the simulation engine 118 may halt the iterations and derive the output values for fine-tuning of the LLM 208. The output values may indicate:

Accuracy = 0.9
Number of iterations for fine-tuning of the LLM 208 = 10 iterations
Processing time for fine-tuning of the LLM 208 = 3 seconds
Hyperparameters to be tuned = learning rate: 0.05

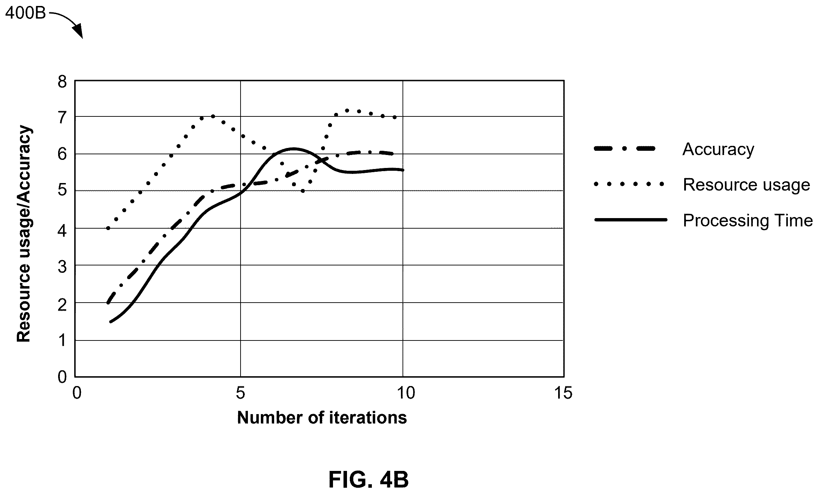

An exemplary graph 400B illustrating a number of iterations estimated for fine-tuning of the LLM 208, and the computer resources required for the estimated number of iterations is depicted in FIG. 4B.

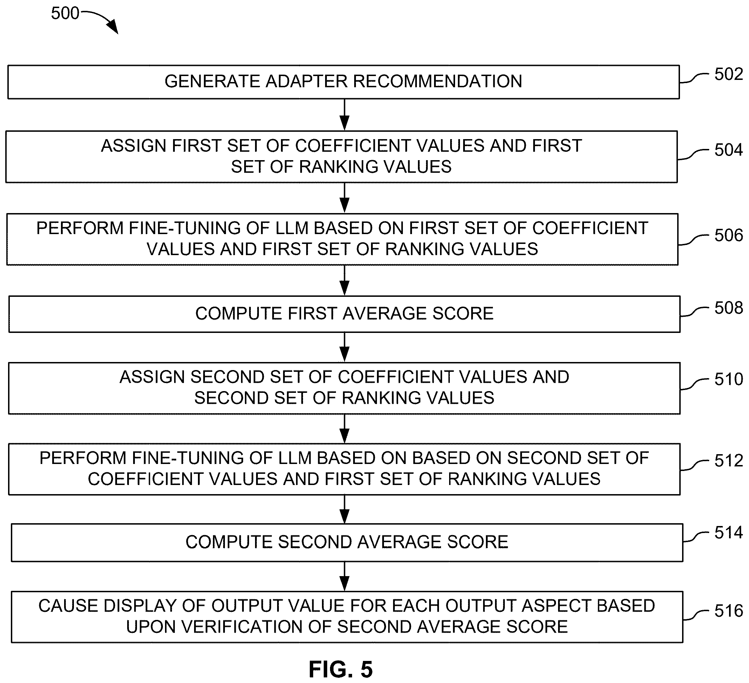

FIG. 5 is a flow diagram that presents an example computer implemented method 500 for optimizing fine-tuning of the LLM 208 (depicted in FIG. 2), in accordance with implementations of the present disclosure. In some implementations, the method 500 may be executed by the processor 110 (including the one or more processors), as described in relation to FIGS 1-3. In some examples, the LLM 208 may be a pre-trained LLM.

The method 500 includes generating 502 an adapter recommendation for fine-tuning of the LLM 208. The adapter recommendation may be generated based on input data and based on a desired output criterion corresponding to each of output aspects. In some examples, the output aspects may include a desired accuracy, a desired processing time, and a desired computer usage constraint. The adapter recommendation may indicate an adapter to be used for fine-tuning of the LLM 208.

The method 500 includes assigning 504 a first set of coefficient values for coefficients and a first set of ranking values, based on the recommended adapter and the LLM 208 to be fine-tuned. Each coefficient value of the first set of coefficient values may correspond with a different output aspect of the output aspects. Each ranking value of the first set of ranking values may correspond with a respective priority of each output aspect of the plurality of output aspects.

Using the first set of coefficient values for the coefficients and the first set of ranking values, the method 500 includes performing 506 fine-tuning of the LLM 208. Fine-tuning of the LLM 208 herein may refer to performing simulation of fine-tuning the LLM 208, which is described in detail in conjunction with FIG. 3, therefore repeated description is omitted for sake of brevity.

Based on the performed fine-tuning of the LLM 208 using the first set of coefficient values for the coefficients and the first set of ranking values, the method 500 includes computing 508 a first average score. The first average score may correspond with a respective weighted priority of each different output aspect of the plurality of output aspects according to the first set of ranking values. Based on the performed fine-tuning of the LLM using the first set of coefficient values for the coefficients and the first set of ranking values, the method 500 may include assigning a first reward function. The first reward function may correspond with achievement of the desired output criterion corresponding to each of the output aspects from the fine-tuning of the LLM 208 using the first set of coefficient values for the coefficients and the first set of ranking values.

Based on at least one of the first average score and the first reward function, the method 500 includes assigning 510 a second set of coefficient values for the coefficients and a second set of ranking values. One or more coefficient values of the second set of coefficient values may correspond with an updated coefficient value for one or more output aspects of the output aspects. One or more ranking values of the second set of ranking values may correspond with an updated ranking value of one or more output aspects of the output aspects for prioritizing. In some examples, the second set of coefficient values are determined in accordance with a value of a learning rate parameter.

Using the second set of coefficient values for the coefficients and the second set of ranking values, the method 500 includes performing 512 fine-tuning of the LLM 208 (e.g., performing simulation of fine-tuning the LLM 208). Based on the performed fine-tuning of the LLM 208 using the second set of coefficient values for the coefficients and the second set of ranking values, the method 500 includes computing 514 a second average score. The second average score corresponds with a respective weighted priority of each different output aspect of the plurality of output aspects according to the second set of training values.

The method 500 includes causing 516 display of an output value for each output aspect of the output aspects, based upon verification of the second average score. The second average score may be verified against a predetermined threshold. When it has been verified that the second average score satisfies the predetermined threshold, the output value for each output aspect may be derived from results of performing 512 fine-tuning of the LLM 208. The output value for each output aspect may be used for actual fine-tuning of the LLM 208.

When it has been verified that the second score does not satisfy the predetermined threshold, the method 500 includes assigning a second reward function based on the performed fine-tuning of the LLM 208 using the second set of coefficient values for the coefficients and the second set of ranking values. The second reward function may correspond with achievement of the desired output criterion corresponding to each of the output aspects from the fine-tuning of the LLM 208 using the second set of coefficient values for the coefficients and the second set of ranking values. Based on at least one of the second average score and the second reward function, the method 500 includes assigning a third set of coefficient values for the coefficients and a third set of ranking values. One or more coefficient values of the third set of coefficient values correspond with an updated coefficient value for one or more output aspects of the output aspects. One or more ranking values of the third set of ranking values correspond with an updated ranking value of one or more output aspects of the output aspects for prioritizing. Using the third set of coefficient values for the coefficients and the third set of ranking values, the method 500 includes performing fine-tuning of the LLM 208 using the third set of coefficient values for the coefficients and the third set of ranking values. Based on the performed fine-tuning of the LLM using the third set of coefficient values for the coefficients and the third set of ranking values, the method 500 includes computing a third average score. The third average score corresponds with a respective weighted priority of each different output aspect of the output aspects according to the third set of ranking values. Further, the method 500 includes verifying whether the third average score satisfies a predetermined threshold value. Based upon verifying that the third average score satisfies the predetermined threshold, the method 500 includes causing display of the output value for each output aspect of the plurality of output aspects.

In some implementations, the method 500 includes determining an uncertainty in the displayed output value for each output aspect of the output aspects. In some examples, the uncertainty may be determined using a Bayesian deep learning technique. Further, the method 500 includes causing display of the uncertainty in the displayed output value for each output aspect of the output aspects.

Implementations of the present disclosure provide technical solutions to multiple technical problems that arise in the context of fine-tuning an LLM. Implementations of the present disclosure provide an output data for fine-tuning of the LLM. The output data may indicate output values of the output aspects, which may be used for fine-tuning of the LLM. The output data may be derived by iteratively performing adaptive multi-objective low rank adaptation for a predefined number of iterations or until a desired criterion corresponding to each of the output aspects may be achieved. The adaptive multi-objective low ranking adaption may be performed by considering and integrating the multiple output aspects simultaneously into a single function (e.g., multi-objective function), performing simulation of fine-tuning the LLM, and dynamically updating coefficients based on results of the simulation (e.g., achieved values for the output aspects). Therefore, the proposed implementations may efficiently explore the output data for fine-tuning of the LLM by reducing overall computation required for the simulation, while resulting in cost and time savings. Further, dynamically updating the coefficients based on the results of the simulation may allow for fine-tuning of the LLM in accordance with changing priorities or constraints, thereby leading to more adaptable and robust fine-tuning method. In addition, consideration of the multiple output aspects makes the present disclosure adaptable to varying requirements and constraints, which may be essential for scaling operations across different use case domains or entities with different needs.

Implementation of the present disclosure further enable usage of the output values of the output aspects in deciding which dataset has to be used or modified, sequenced, reduced or deleted or added to fine-tune the LLM in minimal time with optimal utilization of the computer resources.

Implementations of the present disclosure may provide the following advantages:

Effective memory management: The adaptive multi-objective low ranking adaption may be performed with a few iterations. Further, with the adaptive multi-objective low ranking adaption, the coefficients may be dynamically updated based on past performance, which may reduce memory consumption of unnecessary computations leading to a potential (e.g., 30%) improvement in utilization of computer resources. Therefore, the proposed adaptive multi-objective low ranking adaption may result in effective memory management.

Computer resource optimization: The adaptive multi-objective low ranking adaption may consider the multiple output aspects in one run, which may enable optimization of the computer resource utilization while reducing costs associated with fine-tuning of the LLM.

Customization: Implementations of the present disclosure may provide options to fine-tune the LLM by balancing trade-off between the multiple output aspects according to specific use case domains.

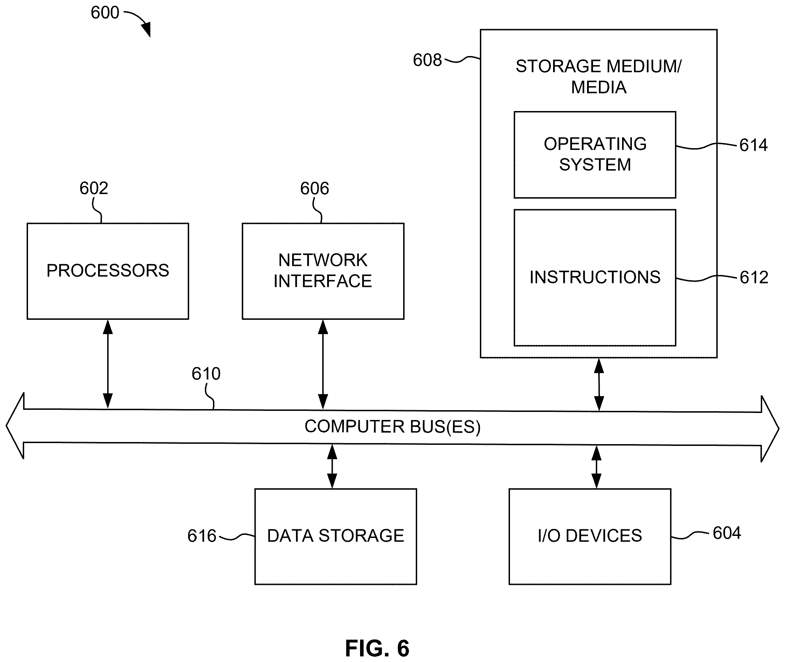

FIG. 6 depicts a computer system 600 that may be used to implement the system 102. More particularly, computing machines such as desktops, laptops, smartphones, tablets, and wearables which may be used to optimize fine-tuning of the LLM 208. The computer system 600 may include additional components not shown and that some of the process components described may be removed and/or modified. In another example, a computer system 600 may be deployed on external-cloud platforms such as cloud, internal corporate cloud computing clusters, organizational computing resources, and/or the like.

The computer system 600 includes processor(s) 602, such as a central processing unit, ASIC or another type of processing circuit, input/output devices 604, such as a display, mouse keyboard, etc., a network interface 606, such as a Local Area Network (LAN), a wireless 802.11x LAN, a 3G or 4G mobile WAN or a WiMax WAN, and a computer-readable medium 608. Each of these components may be operatively coupled to a bus 610. The computer-readable medium 608 may be any suitable medium that participates in providing instructions to the processor(s) 602 for execution. For example, the computer-readable medium 608 may be non-transitory or non-volatile medium, such as a magnetic disk or solid-state non-volatile memory or volatile medium such as RAM. The instructions or modules stored on the computer-readable medium 608 may include machine-readable instructions 612 executed by the processor(s) 602 that cause the processor(s) 602 to perform the methods and functions of the system 102.

The system 102 may be implemented as software stored on a non-transitory processor-readable medium and executed by the processor(s) 602. For example, the computer-readable medium 608 may store an operating system 614, such as MAC OS, MS WINDOWS, UNIX, or LINUX, and code, for the system 102. The operating system 614 may be multi-user, multiprocessing, multitasking, multithreading, real-time, and the like. For example, during runtime, the operating system 614 is running and the code for the system 102 is executed by the processor(s) 602.

The computer system 600 may include a data storage 616, which may include non-volatile data storage. The data storage 616 stores any data used or generated by the system 102.

The network interface 606 connects the computer system 600 to internal systems for example, via a LAN. Also, the network interface 606 may connect the computer system 600 to the Internet. For example, the computer system 600 may connect to web browsers and other external applications and systems via the network interface 606.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer also includes, or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 602 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

**Claims**

1. A computer-implemented method comprising:

    generating, based on input data and based on a desired output criterion corresponding to each of a plurality of output aspects, an adapter recommendation for fine-tuning of a large language model (LLM);
    assigning, based on the adapter recommendation and the LLM, a first set of coefficient values for a plurality of coefficients and a first set of ranking values, wherein each coefficient value of the first set of coefficient values corresponds with a different output aspect of the plurality of output aspects, and wherein each ranking value of the first set of ranking values corresponds with a respective priority of each output aspect of the plurality of output aspects;
    performing fine-tuning of the LLM using the first set of coefficient values for the plurality of coefficients and the first set of ranking values;
    computing, based on the performing fine-tuning of the LLM using the first set of coefficient values for the plurality of coefficients and the first set of ranking values, a first average score, the first average score corresponds with a respective weighted priority of each different output aspect of the plurality of output aspects according to the first set of ranking values;
    assigning, based on the performing fine-tuning of the LLM using the first set of coefficient values for the plurality of coefficients and the first set of ranking values, a first reward function, wherein the first reward function corresponds with achievement of the desired output criterion corresponding to each of the plurality of output aspects from fine-tuning of the LLM using the first set of coefficient values for the plurality of coefficients and the first set of ranking values;
    assigning, based on at least one of the first average score and the first reward function, a second set of coefficient values for the plurality of coefficients and a second set of ranking values, wherein one or more coefficient values of the second set of coefficient values correspond with an updated coefficient value for one or more output aspects of the plurality of output aspects, and wherein one or more ranking values of the second set of ranking values correspond with an updated ranking value of one or more output aspects of the plurality of output aspects for prioritizing;
    performing fine-tuning of the LLM using the second set of coefficient values for the plurality of coefficients and the second set of ranking values;
    computing, based on the performing fine-tuning of the LLM using the second set of coefficient values for the plurality of coefficients and the second set of ranking values, a second average score, the second average score corresponds with a respective weighted priority of each different output aspect of the plurality of output aspects according to the second set of ranking values;
    verifying whether the second average score satisfies a predetermined threshold value; and
    causing display of an output value for each output aspect of the plurality of output aspects based upon verifying the second average score satisfies the predetermined threshold value.

2. The computer-implemented method of claim 1 further comprising:

    determining an uncertainty in the displayed output value for each output aspect of the plurality of output aspects;

and
causing display of the uncertainty in the displayed output value for each output aspect of the plurality of output aspects,

wherein determining the uncertainty optionally comprises determining the uncertainty using a Bayesian deep learning technique.

3. The computer-implemented method of claim 1 or 2, wherein the plurality of output aspects comprises a desired processing time, a desired accuracy, and/or a desired computer usage constraint.

4. The computer-implemented method of any one of the preceding claims, wherein based upon verifying the second average score fails to satisfy the predetermined threshold value, the method further comprising:

assigning, based on the performing fine-tuning of the LLM using the second set of coefficient values for the plurality of coefficients and the second set of ranking values, a second reward function, wherein the second reward function corresponds with achievement of the desired output criterion corresponding to each of the plurality of output aspects from fine-tuning of the LLM using the second set of coefficient values for the plurality of coefficients and the second set of ranking values;
assigning, based on at least one of the second average score and the second reward function, a third set of coefficient values for the plurality of coefficients and a third set of ranking values, wherein one or more coefficient values of the third set of coefficient values correspond with an updated coefficient value for one or more output aspects of the plurality of output aspects, and wherein one or more ranking values of the third set of ranking values correspond with an updated ranking value of one or more output aspects of the plurality of output aspects for prioritizing;
performing fine-tuning of the LLM using the third set of coefficient values for the plurality of coefficients and the third set of ranking values;
computing, based on the performing fine-tuning of the LLM using the third set of coefficient values for the plurality of coefficients and the third set of ranking values, a third average score, the third average score corresponds with a respective weighted priority of each different output aspect of the plurality of output aspects according to the third set of ranking values;
verifying whether the third average score satisfies a predetermined threshold value; and
causing display of the output value for each output aspect of the plurality of output aspects based upon verifying the third average score satisfies the predetermined threshold value.

5. The computer-implemented method of any one of the preceding claims, wherein the LLM is a pre-trained LLM; and/or wherein the second set of coefficient values is determined in accordance with a value of a learning rate parameter.

6. A system comprising:

at least one memory storing machine executable instructions; and
at least one processor communicatively coupled with the at least one memory, and configured to execute the machine executable instructions to perform operations comprising:

generating, based on input data and based on a desired output criterion corresponding to each of a plurality of output aspects, an adapter recommendation for fine tuning of a large language model (LLM);
assigning, based on the adapter recommendation and the LLM, a first set of coefficient values for a plurality of coefficients and a first set of ranking values, wherein each coefficient value of the first set of coefficient values corresponds with a different output aspect of the plurality of output aspects, and wherein each ranking value of the first set of ranking values corresponds with a respective priority of each output aspect of the plurality of output aspects;
performing fine-tuning of the LLM using the first set of coefficient values for the plurality of coefficients and the first set of ranking values;
computing, based on the performing fine-tuning of the LLM using the first set of coefficient values for the plurality of coefficients and the first set of ranking values, a first average score, the first average score corresponds with a respective weighted priority of each different output aspect of the plurality of output aspects according to the first set of ranking values;
assigning, based on the performing fine-tuning of the LLM using the first set of coefficient values for the plurality of coefficients and the first set of ranking values, a first reward function, wherein the first reward function corresponds with achievement of the desired output criterion corresponding to each of the plurality of output aspects from fine-tuning of the LLM using the first set of coefficient values for the plurality of coefficients and the first set of ranking values;

assigning, based on at least one of the first average score and the first reward function, a second set of coefficient values for the plurality of coefficients and a second set of ranking values, wherein one or more coefficient values of the second set of coefficient values correspond with an updated coefficient value for one or more output aspects of the plurality of output aspects, and wherein one or more ranking values of the second set of ranking values correspond with an updated ranking value of one or more output aspects of the plurality of output aspects for prioritizing;

performing fine-tuning of the LLM using the second set of coefficient values for the plurality of coefficients and the second set of ranking values;

computing, based on the performing fine-tuning of the LLM using the second set of coefficient values for the plurality of coefficients and the second set of ranking values, a second average score, the second average score corresponds with a respective weighted priority of each different output aspect of the plurality of output aspects according to the second set of ranking values;

verifying whether the second average score satisfies a predetermined threshold value; and

causing display of an output value for each output aspect of the plurality of output aspects based upon verifying the second average score satisfies the predetermined threshold value.

7. The system of claim 6, wherein the operations further comprise:

determining an uncertainty in the displayed output value for each output aspect of the plurality of output aspects; and

causing display of the uncertainty in the displayed output value for each output aspect of the plurality of output aspects,

wherein determining the uncertainty optionally comprises determining the uncertainty using a Bayesian deep learning technique.

8. The system of claim 6 or 7, wherein the plurality of output aspects comprises a desired processing time, a desired accuracy, and/or a desired computer usage constraint.

9. The system of any one of claims 6 to 8, wherein based upon verifying the second average score fails to satisfy the predetermined threshold value, the operations further comprise:

assigning, based on the performing fine-tuning of the LLM using the second set of coefficient values for the plurality of coefficients and the second set of ranking values, a second reward function, wherein the second reward function corresponds with achievement of the desired output criterion corresponding to each of the plurality of output aspects from fine-tuning of the LLM using the second set of coefficient values for the plurality of coefficients and the second set of ranking values;

assigning, based on at least one of the second average score and the second reward function, a third set of coefficient values for the plurality of coefficients and a third set of ranking values, wherein one or more coefficient values of the third set of coefficient values correspond with an updated coefficient value for one or more output aspects of the plurality of output aspects, and wherein one or more ranking values of the third set of ranking values correspond with an updated ranking value of one or more output aspects of the plurality of output aspects for prioritizing;

performing fine-tuning of the LLM using the third set of coefficient values for the plurality of coefficients and the third set of ranking values;

computing, based on the performing fine-tuning of the LLM using the third set of coefficient values for the plurality of coefficients and the third set of ranking values, a third average score, the third average score corresponds with a respective weighted priority of each different output aspect of the plurality of output aspects according to the third set of ranking values;

verifying whether the third average score satisfies a predetermined threshold value; and

causing display of the output value for each output aspect of the plurality of output aspects based upon verifying the third average score satisfies the predetermined threshold value.

10. The system of any one of claims 6 to 9, wherein the LLM is a pre-trained LLM; and/or
wherein the second set of coefficient values is determined in accordance with a value of a learning rate parameter.

11. A non-transitory computer-readable media (CRM) comprising instructions thereon, which, when executed by at least one processor of a computing device, cause the computing device to perform operations comprising:

generating, based on input data and based on a desired output criterion corresponding to each of a plurality of output aspects, an adapter recommendation for fine tuning of a large language model (LLM);

assigning, based on the recommended adapter and the LLM, a first set of coefficient values for a plurality of coefficients and a first set of ranking values, wherein each coefficient value of the first set of coefficient values corresponds with a different output aspect of the plurality of output aspects, and wherein each ranking value of the first set of ranking values corresponds with a respective priority of each output aspect of the plurality of output aspects;

performing fine-tuning of the LLM using the first set of coefficient values for the plurality of coefficients and the first set of ranking values;

computing, based on the performing fine-tuning of the LLM using the first set of coefficient values for the plurality of coefficients and the first set of ranking values, a first average score, the first average score corresponds with a respective weighted priority of each different output aspect of the plurality of output aspects according to the first set of ranking values;

assigning, based on the performing fine-tuning of the LLM using the first set of coefficient values for the plurality of coefficients and the first set of ranking values, a first reward function, wherein the first reward function corresponds with achievement of the desired output criterion corresponding to each of the plurality of output aspects from fine-tuning of the LLM using the first set of coefficient values for the plurality of coefficients and the first set of ranking values;

assigning, based on at least one of the first average score and the first reward function, a second set of coefficient values for the plurality of coefficients and a second set of ranking values, wherein one or more coefficient values of the second set of coefficient values correspond with an updated coefficient value for one or more output aspects of the plurality of output aspects, and wherein one or more ranking values of the second set of ranking values correspond with an updated ranking value of one or more output aspects of the plurality of output aspects for prioritizing;

performing fine-tuning of the LLM using the second set of coefficient values for the plurality of coefficients and the second set of ranking values;

computing, based on the performing fine-tuning of the LLM using the second set of coefficient values for the plurality of coefficients and the second set of ranking values, a second average score, the second average score corresponds with a respective weighted priority of each different output aspect of the plurality of output aspects according to the second set of ranking values;

verifying whether the second average score satisfies a predetermined threshold value; and

causing display of an output value for each output aspect of the plurality of output aspects based upon verifying the second average score satisfies the predetermined threshold value.

12. The non-transitory CRM of claim 11, wherein the operations further comprise:

determining an uncertainty in the displayed output value for each output aspect of the plurality of output aspects; and

causing display of the uncertainty in the displayed output value for each output aspect of the plurality of output aspects,

wherein determining the uncertainty optionally comprises determining the uncertainty using a Bayesian deep learning technique.

13. The non-transitory CRM of claim 11 or 12, wherein the plurality of output aspects comprises a desired processing time, a desired accuracy, and/or a desired computer usage constraint.

14. The non-transitory CRM of any one of claims 11 to 13, wherein based upon verifying the second average score fails to satisfy the predetermined threshold value, the operations further comprise:

assigning, based on the performing fine-tuning of the LLM using the second set of coefficient values for the plurality of coefficients and the second set of ranking values, a second reward function, wherein the second reward function corresponds with achievement of the desired output criterion corresponding to each of the plurality of output aspects from fine-tuning of the LLM using the second set of coefficient values for the plurality of coefficients and the second set of ranking values;

assigning, based on at least one of the second average score and the second reward function, a third set of coefficient values for the plurality of coefficients and a third set of ranking values, wherein one or more coefficient values of the third set of coefficient values correspond with an updated coefficient value for one or more output aspects of the plurality of output aspects, and wherein one or more ranking values of the third set of ranking values correspond with an updated ranking value of one or more output aspects of the plurality of output aspects for prioritizing;

performing fine-tuning of the LLM using the third set of coefficient values for the plurality of coefficients and the third set of ranking values;

computing, based on the performing fine-tuning of the LLM using the third set of coefficient values for the plurality of coefficients and the third set of ranking values, a third average score, the third average score corresponds with a respective weighted priority of each different output aspect of the plurality of output aspects according to the third set of ranking values;

verifying whether the third average score satisfies a predetermined threshold value; and

causing display of the output value for each output aspect of the plurality of output aspects based upon verifying the third average score satisfies the predetermined threshold value.

15. The non-transitory CRM of any one of claims 11 to 14, wherein the LLM is a pre-trained LLM, and wherein the second set of coefficient values is determined in accordance with a value of a learning rate parameter.

EP 4 756 678 A1

**FIG. 1**

**FIG. 2**

EP 4 756 678 A1

**FIG. 3**

EP 4 756 678 A1

400A

FIG. 4A

FIG. 4B

500

GENERATE ADAPTER RECOMMENDATION — 502

ASSIGN FIRST SET OF COEFFICIENT VALUES AND FIRST SET OF RANKING VALUES — 504

PERFORM FINE-TUNING OF LLM BASED ON FIRST SET OF COEFFICIENT VALUES AND FIRST SET OF RANKING VALUES — 506

COMPUTE FIRST AVERAGE SCORE — 508

ASSIGN SECOND SET OF COEFFICIENT VALUES AND SECOND SET OF RANKING VALUES — 510

PERFORM FINE-TUNING OF LLM BASED ON BASED ON SECOND SET OF COEFFICIENT VALUES AND FIRST SET OF RANKING VALUES — 512

COMPUTE SECOND AVERAGE SCORE — 514

CAUSE DISPLAY OF OUTPUT VALUE FOR EACH OUTPUT ASPECT BASED UPON VERIFICATION OF SECOND AVERAGE SCORE — 516

**FIG. 5**

**FIG. 6**

Europäisches
Patentamt

European
Patent Office

Office européen
des brevets

## EUROPEAN SEARCH REPORT

**Application Number**

**EP 25 22 0698**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/098783 A1 (ZAREMOODI POORYA [AU] ET AL) 30 March 2023 (2023-03-30) * paragraphs [0128], [0135], [0136]; claims 1,5,6 * ----- | 1-15 | INV. G06N3/0475 G06N3/09 G06N3/0985 |
| A | Xiao Guangxuan ET AL: "Offsite-Tuning: Transfer Learning without Full Model", arXiv.org, 9 February 2023 (2023-02-09), XP093384520, Retrieved from the Internet: URL:https://arxiv.org/pdf/2302.04870v1 * abstract; figure 2 * * sections 3 and 4 * ----- | 1-15 | |

**TECHNICAL FIELDS SEARCHED (IPC)**

G06N
G06E

The present search report has been drawn up for all claims

| Place of search | Date of completion of the search | Examiner |
|---|---|---|
| Munich | 21 April 2026 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0698

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2026

| Patent document cited in search report | Publication date | Patent family member(s) | Publication date |
|---|---|---|---|
| US 2023098783 A1 | 30-03-2023 | US 2023098783 A1 | 30-03-2023 |
|  |  | US 2025218428 A1 | 03-07-2025 |

EPO FORM P0459

For more details about this annex : see Official Journal of the European Patent Office, No. 12/82